# EUROPEAN PATENT APPLICATION

(11) **EP 4 707 005 A1**
(43) Date of publication of application: **11.03.2026**
(21) Application number: 25200365.2
(22) Date of filing: 04.09.2025
(51) Int. Cl.: B60H 1/00, B60J 7/043

(54) **WORK VEHICLE**

(30) Priority: 06.09.2024 JP 2024153608
(71) Applicant: Yanmar Holdings Co., Ltd., Osaka-shi, Osaka (JP)
(72) Inventor: NOMOTO, Soshi, Okayama (JP); NAKAGAWA, Yohei, Okayama (JP); OKAMOTO, Naoto, Okayama (JP)
(74) Representative: Sekiguchi, Kazuya

(57) **Abstract**

[Problem] The present invention provides a work vehicle capable of sufficiently securing visibility of a skylight regardless of installation of an air conditioning unit in a cabin.

[Solution] A tractor 1 includes a work vehicle including a cabin 12 having a driver's seat 30 includes: a skylight 52 disposed in a roof portion 42 of the cabin 12; and an air conditioning duct front portion 49b disposed in a front portion of the roof portion 42, wherein a skylight frame 53 opened to the skylight 52 includes a first frame portion 53a provided behind the duct front portion 49b, and a second frame portion 53b continuous from the first frame portion in a region that at least partially overlaps the duct front portion 49b in a front-rear direction and in which the duct front portion 49b is not disposed in a plan view.

## Description

### TECHNICAL FIELD

The present invention relates to a work vehicle.

### BACKGROUND ART

Conventionally, some work vehicles such as tractors are provided with a cabin having a driver's seat. The cabin covers a space including a driver's seat. In some work vehicles, a roof portion of the cabin is provided with a skylight (sunroof) for daylighting and ventilation inside the cabin.

For example, Patent Document 1 discloses a cabin device mounted on a tractor vehicle body, and in the cabin device, a skylight frame is installed in a front upper portion of a cabin framework.

### PRIOR ART DOCUMENT

### PATENT DOCUMENT

Patent Document 1: Japanese Unexamined Patent Application Publication No. 2011-207416

### SUMMARY OF INVENTION

### TECHNICAL PROBLEM

Conventionally, some work vehicles are provided with an air conditioning unit that conditions air in an internal space of a cabin. The air conditioning unit is provided with an air conditioning duct and a discharge port in a front portion of a roof portion of the cabin in order to discharge conditioned air from a front side of the cabin to a driver's seat. For this reason, a space for securing a skylight is narrow in the roof portion of the cabin, and the skylight becomes small. Therefore, there is a concern that visibility through the skylight may be reduced, or a daylight amount or a ventilation amount may be reduced.

It is an object of the present invention to provide a work vehicle capable of sufficiently securing visibility of a skylight regardless of installation of an air conditioning unit in a cabin.

### SOLUTION TO PROBLEM

In order to the above problem, a work vehicle including a cabin having a driver's seat includes: a skylight disposed in a roof portion of the cabin; and an air conditioning duct front portion disposed in a front portion of the roof portion, wherein a skylight frame opened to the skylight includes a first frame portion provided behind the duct front portion, and a second frame portion continuous from the first frame portion in a region that at least partially overlaps the duct front portion in a front-rear direction and in which the duct front portion is not disposed in a plan view.

### ADVANTAGEOUS EFFECTS OF INVENTION

The present invention provides a work vehicle capable of sufficiently securing visibility of a skylight regardless of installation of an air conditioning unit in a cabin.

### BRIEF DESCRIPTION OF DRAWINGS

FIG. 1 is a side view schematically illustrating a tractor according to an embodiment of the present invention.
FIG. 2 is a perspective view illustrating a cabin of the tractor according to the embodiment of the present invention, as viewed from the front.
FIG. 3 is a front view illustrating the cabin of the tractor according to the embodiment of the present invention.
FIG. 4 is a rear view illustrating the cabin of the tractor according to the embodiment of the present invention.
FIG. 5 is a side view illustrating the cabin of the tractor according to the embodiment of the present invention.
FIG. 6 is a top view illustrating the cabin of the tractor according to the embodiment of the present invention.
FIG. 7 is a perspective view illustrating a roof portion of the cabin of the tractor according to the embodiment of the present invention, as viewed from above.
FIG. 8 is a perspective view illustrating a roof portion of the cabin of the tractor according to the embodiment of the present invention, as viewed from the inside.
FIG. 9 is a top view illustrating the roof portion of the cabin of the tractor according to the embodiment of the present invention in a state where the upper side portion is removed.
FIG. 10 is a perspective view illustrating the roof portion of the cabin of the tractor according to the embodiment of the present invention in a state where the upper side portion is removed.
FIG. 11 is a side view illustrating a skylight and a shielding member in the cabin of the tractor according to the embodiment of the present invention.
FIG. 12 is a side view illustrating a skylight and a shielding member in the cabin of the tractor according to the embodiment of the present invention.
FIG. 13 is a bottom view illustrating the shielding member in a full light shielding mode of the cabin in the tractor according to the embodiment of the present invention.
FIG. 14 is a bottom view illustrating the shielding member in a partial light shielding mode of the cabin of the tractor according to the embodiment of the present invention.
FIG. 15 is a perspective view illustrating the shielding member in a partial light shielding mode of the cabin of the tractor according to the embodiment of the present invention.
FIG. 16 is a perspective view illustrating a shielding member fixing portion for fixing the shielding member in the cabin of the tractor according to the embodiment of the present invention.

### DESCRIPTION OF EMBODIMENTS

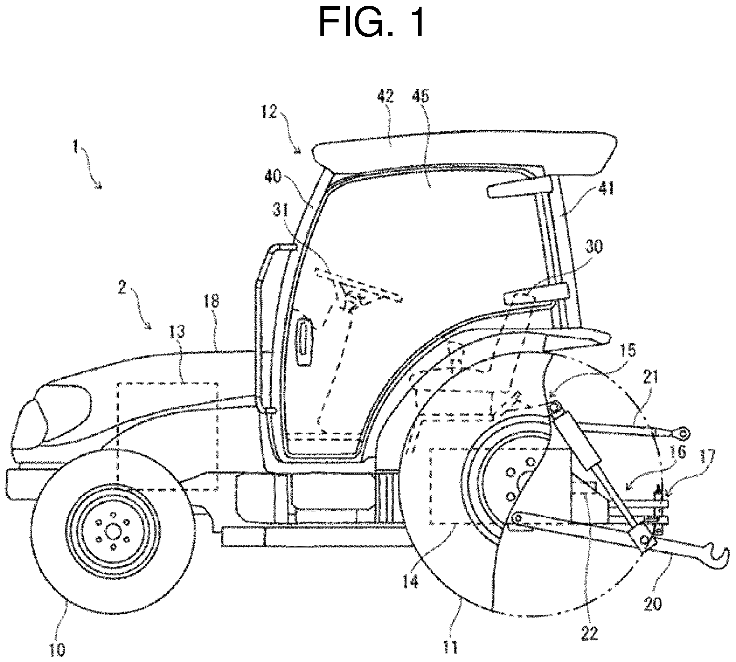

The work vehicle of the present invention performs work travel in which work is performed by a work machine while traveling in a field. A tractor 1, which is an embodiment of a work vehicle of the present invention, will be described with reference to the drawings. FIG. 1 is a side view of the tractor 1.

As illustrated in FIG. 1, the tractor 1 includes a vehicle body 2 and a work machine (not illustrated), and is configured to travel due to the vehicle body 2 while the work machine performs work such as plowing. In the tractor 1, work machines to perform a variety of works, such as a rotary, a harrow, a loader, and a box scraper, are mounted on the vehicle body 2 as appropriate.

A pair of left and right front wheels 10 are provided on a lower side of a front portion of the vehicle body 2, and a pair of left and right rear wheels 11 are provided on a lower side of a rear portion of the vehicle body 2. In the present embodiment, as illustrated in FIG. 1, an example in which the front wheel 10 is constituted by a tire and the rear wheel 11 is constituted by a tire will be described, but the present invention is not limited to this example. In another example, a so-called half crawler in which the front wheel 10 is constituted by a tire and the rear wheel 11 is constituted by a crawler may be provided, or a so-called full crawler in which the front wheel 10 and the rear wheel 11 are constituted by crawlers instead of tires may be provided.

A cabin 12 accommodating a driver is provided in an upper portion of the vehicle body 2. A driver's seat 30 on which the driver is seated is provided inside the cabin 12, and various operation tools are provided around the driver's seat 30.

For example, as the operation tool, a steering wheel 31 for steering of the front wheel 10 is provided in front of the driver's seat 30. Around the steering wheel 31, a raising/lowering lever (not illustrated) for forcibly moving the work machine to the highest position or the lowest position, a forward/backward travel switching lever (not illustrated) for switching a traveling direction of the vehicle body 2 between forward travel and backward travel, and the like are provided. Various pedals (not illustrated) operated by the driver are provided on a floor surface below the steering wheel 31. The various pedals (not illustrated) include a brake pedal for braking the vehicle body 2, a clutch pedal for operating a clutch (not illustrated) for switching between transmission and interruption of power, and an accelerator pedal for increasing and decreasing a rotation speed of an engine 13 (a vehicle speed of the vehicle body 2).

The engine 13 as a power source is incorporated in a front portion of the vehicle body 2, and the engine 13 is covered with a hood 18. A transmission device 14 is provided behind the engine 13 and between the pair of left and right rear wheels 11. Power of the engine 13 is transmitted to the transmission device 14, is changed in speed by the transmission device 14, and is transmitted to each of the front wheels 10 and each of the rear wheels 11. A rear portion of the vehicle body 2 is provided with a work machine lifting mechanism 15 and a work machine angle changing mechanism 16 that drive the work machine by hydraulic oil pressure, and a towing portion 17 that tows the work machine.

A pair of left and right lower links 20, a top link 21, and a PTO shaft 22 are connected to a rear portion of the transmission device 14, and each lower link 20, the top link 21, and the PTO shaft 22 are disposed so as to extend rearward. The work machine is coupled to rear ends of each lower link 20, the top link 21, and the PTO shaft 22, and is driven by the PTO shaft 22 via a drive shaft by connecting the drive shaft of the work machine to the PTO shaft 22.

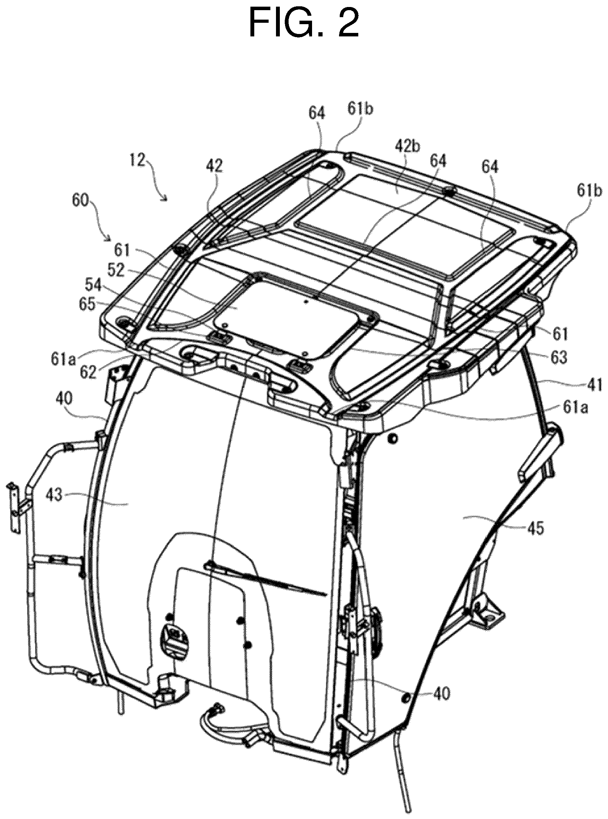

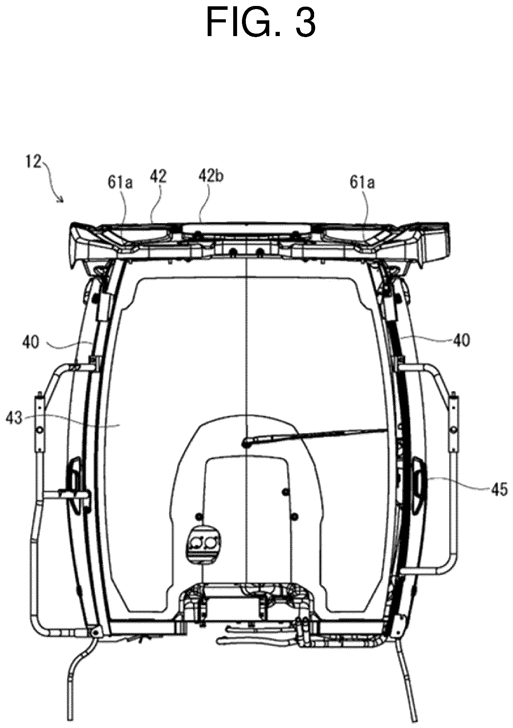

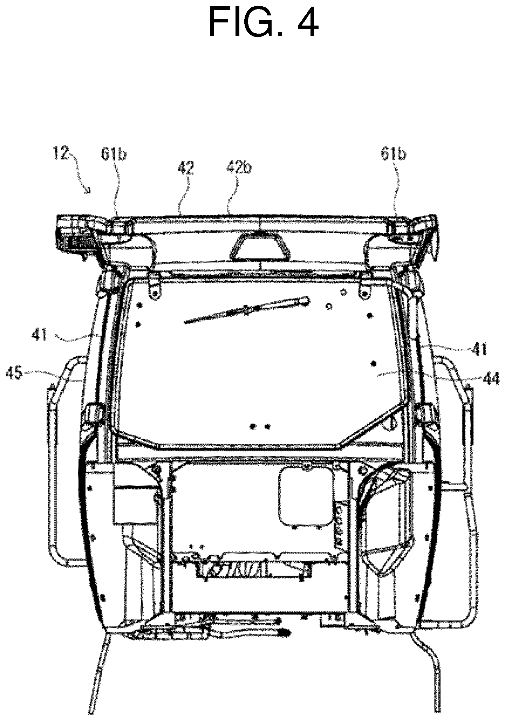

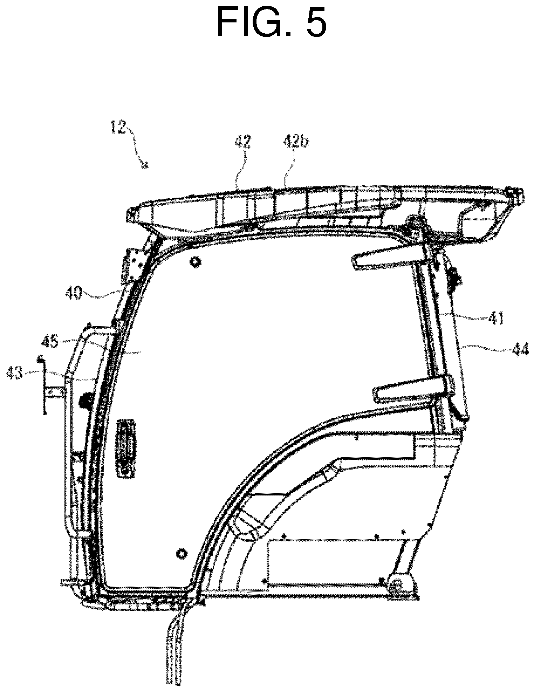

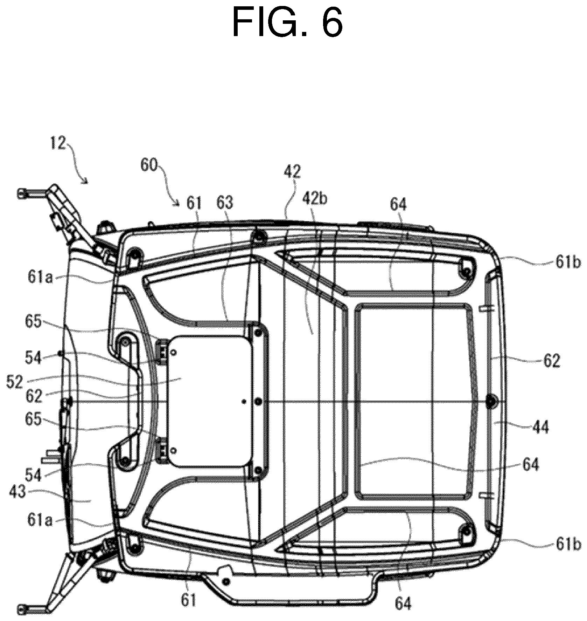

Next, the cabin 12 will be described. FIG. 2 is a perspective view illustrating the cabin 12 from the front, FIG. 3 is a front view of the cabin 12, FIG. 4 is a rear view of the cabin 12, FIG. 5 is a side view of the cabin 12, and FIG. 6 is a top view of the cabin 12.

The cabin 12 has a frame configuration including a pair of left and right front pillar portions 40 disposed before the driver's seat 30, a pair of left and right rear pillar portions 41 disposed behind the driver's seat 30, a front beam portion (not illustrated) disposed across upper ends of the pair of front pillar portions 40, a rear beam portion (not illustrated) disposed across upper ends of the pair of rear pillar portions 41, and side beam portions (not illustrated) disposed across the upper ends of the front pillar portions 40 and the upper ends of the rear pillar portions 41 on the left and right sides.

In the cabin 12, a roof portion 42 is disposed on an upper side of a substantially rectangular roof frame constituted by the front beam portion, the rear beam portion, and the left and right side beam portions. In the cabin 12, a windshield 43 is disposed in a front surface region constituted by the front beam portion and the pair of front pillar portions 40, and a rear glass 44 is disposed in a rear surface region constituted by the rear beam portion and the pair of rear pillar portions 41. In the cabin 12, a side door 45 is disposed in a side surface region constituted by the side beam portion, the front pillar portion 40, and the rear pillar portion 41, and the side door 45 is supported by the rear pillar portion 41 in an openable and closable manner.

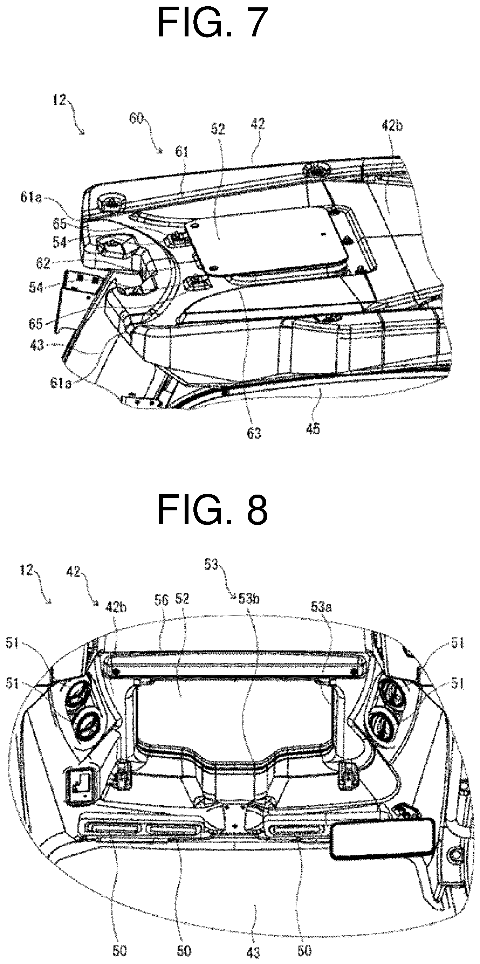

The roof portion 42 is formed by combining a lower side portion 42a and an upper side portion 42b to have a substantially rectangular shape in a plan view and a flat shape in the vertical direction. FIG. 7 is a perspective view illustrating a front portion of the roof portion 42, as viewed from above, and FIG. 8 is a perspective view illustrating the front portion of the roof portion 42, as viewed from the inside of the cabin 12.

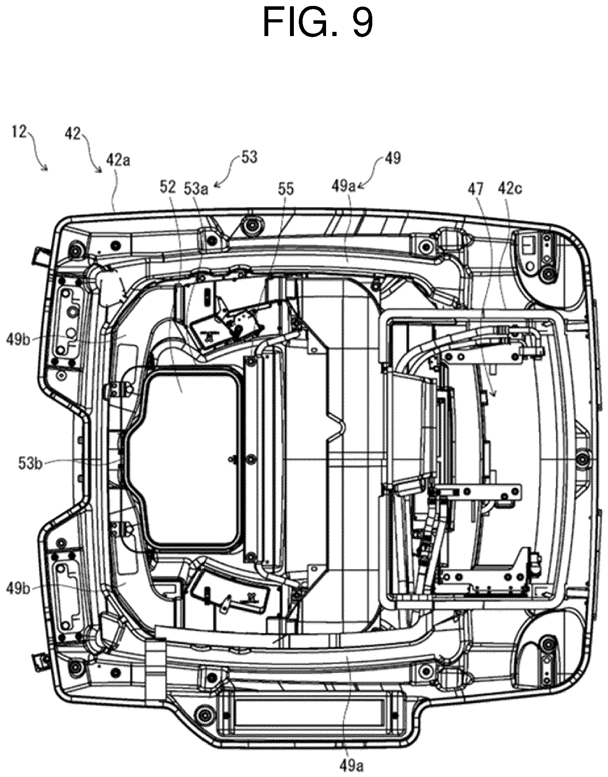

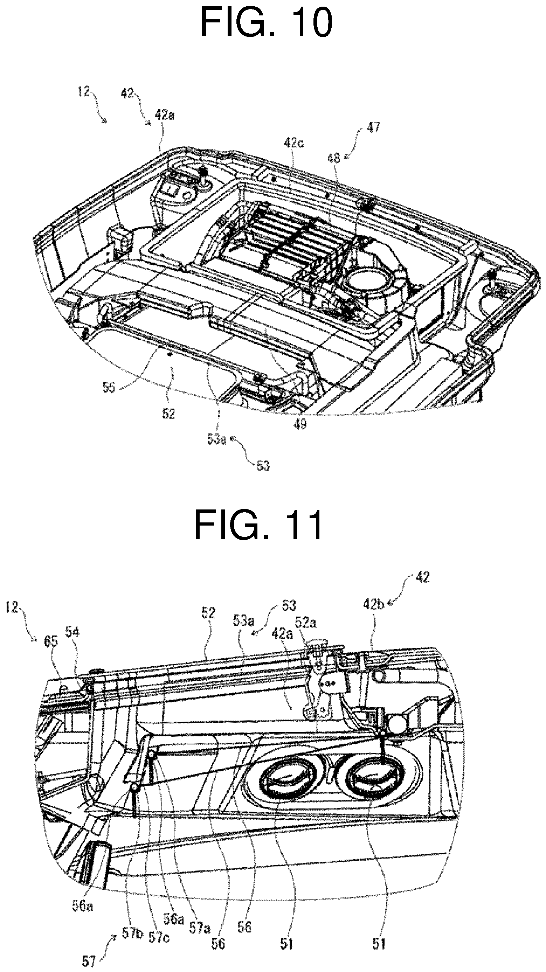

FIG. 9 is a top view of the roof portion 42 with the upper side portion 42b removed, and FIG. 10 is a perspective view of a rear portion of the roof portion 42 with the upper side portion 42b removed, as viewed from above.

An air conditioning unit 47 is provided between the lower side portion 42a and the upper side portion 42b of the roof portion 42. The air conditioning unit 47 includes an air conditioning main body 48, an air conditioning duct 49, a front discharge port 50, and a side discharge port 51. FIG. 9 illustrates a state in which the air conditioning main body 48 is removed. The roof portion 42 is provided with a skylight 52 formed of glass, acrylic, or the like in a flat plate shape, and a skylight frame 53 opened to the skylight 52.

The air conditioning main body 48 is provided in a rear portion of the roof portion 42, and is accommodated in a compartment surrounded by a partition wall 42c erected on a lower side portion 42a, for example. The front discharge port 50 is open to the inside of the cabin 12 at a front end portion of the roof portion 42 in order to discharge conditioned air from the front side in the cabin 12 to the driver's seat 30. The side discharge port 51 is open to the inside of the cabin 12 at both left and right side portions of the roof portion 42 in order to discharge conditioned air from the sides in the cabin 12 to the driver's seat 30. Although not illustrated, the air conditioning unit 47 may include a rear discharge port that discharges conditioned air from the rear in the cabin 12 to the driver's seat 30.

The air conditioning duct 49 is arranged from the air conditioning main body 48 to the front discharge port 50 and the side discharge port 51, and specifically, includes a pair of duct side portions 49a portions arranged forward from the air conditioning main body 48 along the left and right sides of the roof portion 42, and a pair of duct front portions 49b arranged from the front ends of the pair of duct side portions 49a along the front side of the roof portion 42. The air conditioning unit 47 has a front discharge port 50 communicating with each duct front portion 49b. Each of the left front discharge port 50 and the right front discharge port 50 may have one front discharge port 50 or may have two or more front discharge ports 50. The air conditioning unit 47 has a side discharge port 51 communicating with each duct side portion 49a.

Each of the left side discharge port 51 and the right side discharge port 51 may have one side discharge port 51 or may have two or more side discharge ports 51.

The skylight frame 53 is formed as a vertical opening in the front portion of the roof portion 42, in an area that avoids the air conditioning unit 47. For example, a skylight frame 53 includes a first frame portion 53a provided provided to be wider in the left-right direction behind the duct front portion 49b, and a second frame portion 53b continuous from the first frame portion 53a in a region that at least partially overlaps the duct front portion 49b in a front-rear direction and in which the duct front portion 49b is not disposed in a plan view.

Specifically, the first frame portion 53a is formed in a substantially rectangular shape in a plan view between the air conditioning main body 48 and the duct front portion 49b, and the second frame portion 53b is formed so as to protrude forward from the center in the left-right direction of the front end of the first frame portion 53a and extend into the pair of duct front portions 49b and the space between the left front discharge port 50 and the right front discharge port 50. Thus, the skylight frame 53 is formed in a convex shape protruding forward in a plan view.

The skylight 52 is formed of a flat plate having an area larger than that of the skylight frame 53 in a plan view, and is formed, for example, in a substantially rectangular shape in a plan view. The skylight 52 is formed of a transparent material such as glass or acrylic.

The skylight 52 is disposed on the upper side of the skylight frame 53, and is attached to the upper side portion 42b of the roof portion 42 via a skylight supporting portion 54 so as to close the skylight frame 53 from above (outside). The upper side portion 42b has a skylight mounting portion 65 at a position higher than the bottom surface of a drainage groove 60 to be described later, and the skylight supporting portion 54 is mounted on the skylight mounting portion 65. The skylight supporting portion 54 is mounted across the front end of the skylight 52 and the skylight mounting portion 65 on the upper side portion 42b of the roof portion 42, at a position that avoids the skylight frame 53 in a plan view, particularly avoiding the second frame portion 53b.

The skylight supporting portion 54 rotatably supports the skylight 52 with respect to the upper side portion 42b, and is formed of, for example, a spring plate or the like that biases the rear end of the skylight 52 upward while supporting the front end of the skylight 52. The skylight 52 pivots between an open state and a closed state with respect to the skylight frame 53 via the skylight supporting portion 54. The skylight 52 is maintained in an open state by being biased upward. The skylight 52 has an operation portion 52a such as a steering wheel operated by the driver to switch between the open state and the closed state of the skylight 52, is switched between maintenance and release of the closed state according to the operation of the operation portion 52a, and is pivotable to the open state when the closed state is released.

The roof portion 42 supports the skylight frame 53 by the upper side portion 42b and the lower side portion 42a, and includes a reinforcing frame 55 that is a reinforcing member for reinforcing support of the skylight frame 53. The reinforcing frame 55 is mounted on the lower side portion 42a in the left-right direction of the skylight frame 53, on the side of the operation portion 52a relative to the skylight frame 53 and at a position close to the operation portion 52a, and supports the rear end of the skylight frame 53. Note that the reinforcing frame 55 preferably has a shape longer than the rear end of the skylight frame 53 in the left-right direction. For example, when the operation portion 52a is provided near the rear edge of the skylight frame 53, a reinforcing frame 55 is disposed behind the skylight frame 53 to reinforce support of its rear portion. The reinforcing frame 55 may be provided on the front side of the skylight frame 53.

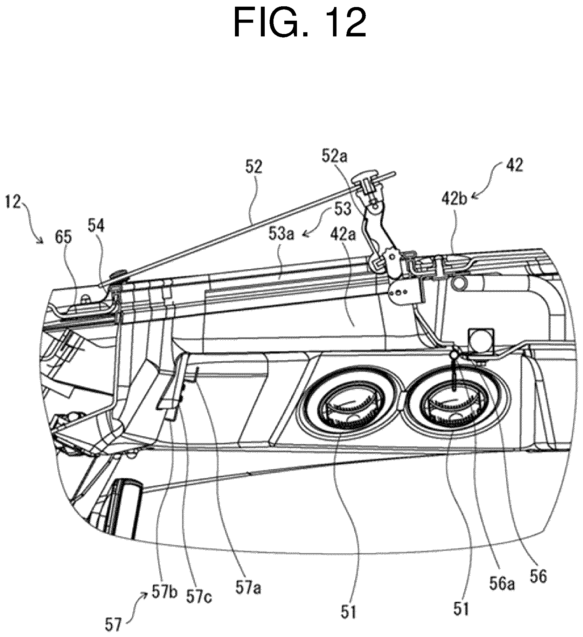

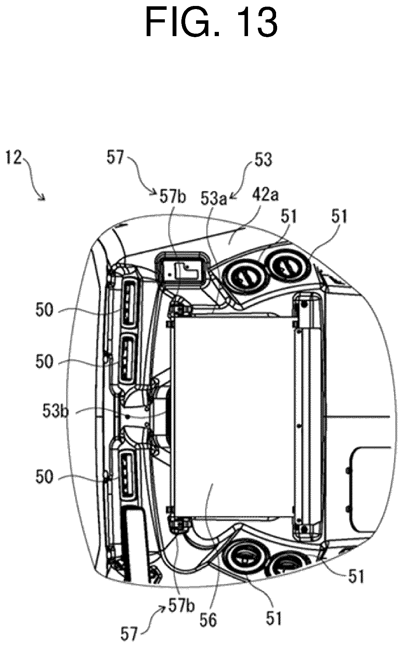

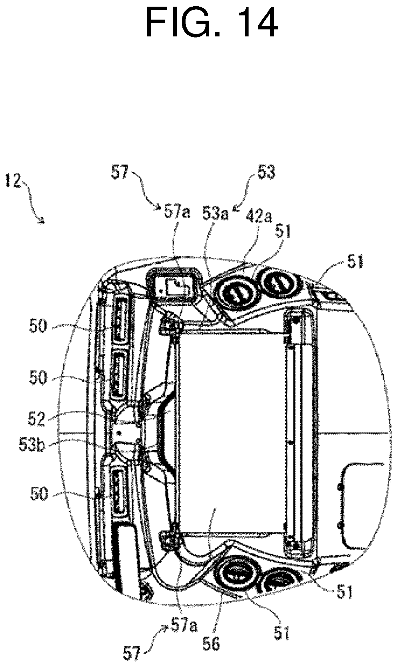

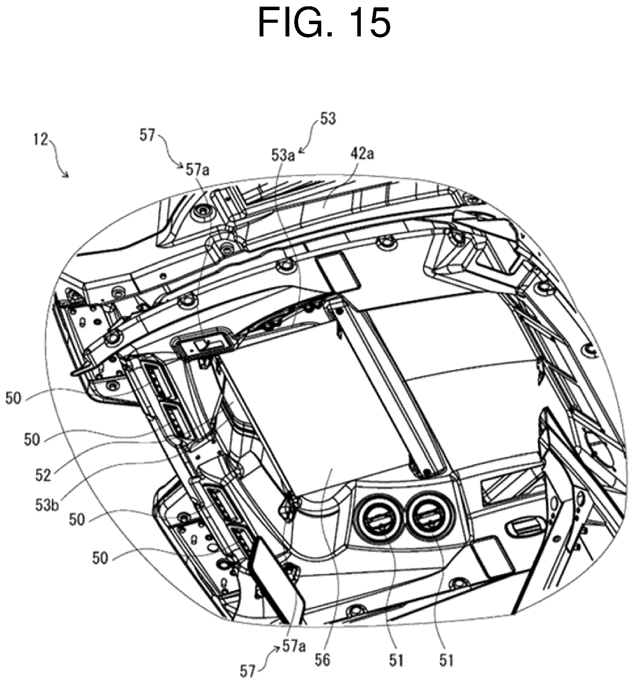

As illustrated in FIGS. 11, 12, 13, 14, and 15, the roof portion 42 includes a shielding member 56 that shields the skylight 52 from the inside of the cabin 12. FIG. 11 is a side view illustrating the skylight 52 and the shielding member 56 in the closed state, FIG. 12 is a side view illustrating the skylight 52 and the shielding member 56 in the open state, FIG. 13 is a bottom view illustrating the shielding member 56 in the full light shielding mode, FIG. 14 is a bottom view illustrating the shielding member 56 in the partial light shielding mode, and FIG. 15 is a perspective view illustrating the shielding member 56 in the partial light shielding mode, as viewed from below.

The shielding member 56 is attached to the lower surface of the lower side portion 42a of the roof portion 42. The shielding member 56 is configured to be able to change a shielded area of the skylight 52 by being displaced in the front-rear direction, for example, by applying a sliding type light shielding plate (shade), a winding type roll screen, or the like. FIGS. 11 and 12 illustrate an example in which the shielding member 56 is constituted by a winding type roll screen, a screen is wound around a shaft portion, and the screen is pulled out from the shaft portion by pulling, and is automatically rewound onto the shaft portion by a spring or the like provided in the shaft portion when pulling is stopped. For example, the shielding member 56 is accommodated at a position behind the skylight 52, and the distal end of the shielding member 56 is displaced from a position (full open position) corresponding to the rearmost end of the skylight 52 to a position (full light shielding position) corresponding to the foremost end of the skylight 52.

The shielding member 56 changes to one of a plurality of light shielding modes by displacing in the front-rear direction. Specifically, the shielding member 56 has, as at least the light shielding mode, a full open mode in which the shielding member 56 is displaced to the full open position to eliminate the shielded area and fully open the skylight 52, a full light shielding mode in which the shielding member 56 is displaced to the full light shielding position to shield the entire region of the skylight 52 as the shielded area, and a partial light shielding mode in which the shielding member 56 is displaced to a predetermined partial light shielding position (for example, a position corresponding to the rear end of the second frame portion 53b) to shield a region excluding the front portion (the second frame portion 53b) of the skylight 52 as the shielded area.

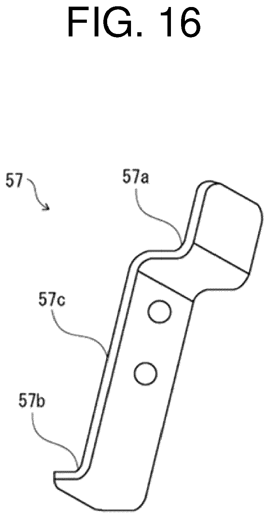

The roof portion 42 includes the shielding member fixing portion 57 that fixes the shielding member 56 to the skylight 52 at any one of a plurality of fixing positions different in the front-rear direction. Regardless of the shielding member fixing portion 57, the shielding member 56 is normally accommodated in the roof portion 42 while being maintained in the full open mode. As illustrated in FIGS. 11, 12, and 16, the shielding member fixing portion 57 includes at least a first fixing portion 57a which fixes the shielding member 56 changed to the partial light shielding mode at the partial light shielding position, and a second fixing portion 57b which fixes the shielding member 56 changed to the full light shielding mode at the full light shielding position. FIG. 16 is a perspective view of the shielding member fixing portion 57, as viewed from the rear.

For example, the shielding member 56 has a rod-shaped supported member 56a that is long in the left-right direction, and the shielding member fixing portion 57 has a pair of first fixing portion 57a and a pair of second fixing portion 57b with which both left and right end portions of the supported member 56a are engaged. For example, as illustrated in FIGS. 11, 12, and 16, the shielding member fixing portion 57 may be configured by a stay 57c or the like in which a first fixing portion 57a and a second fixing portion 57b are integrally formed in a stepped shape. Alternatively, the shielding member fixing portion 57 may have the first fixing portion 57a and the second fixing portion 57b as separate members.

As illustrated in FIGS. 2, 6, and 7, the roof portion 42 has a drainage groove 60 (drainage portion) recessed in the upper surface of the upper side portion 42b of the roof portion 42 in order to drain water accumulated on the upper surface of the roof portion 42 due to precipitation or the like. The roof portion 42 has a peak behind the center in the front-rear direction, and is inclined downward toward the front side and the rear side from the peak. The roof portion 42 has a peak at the center in the left-right direction, and is inclined downward toward the left side and the right side from the peak. The drainage groove 60 is inclined similarly to the inclination of the roof portion 42.

The drainage groove 60 has a first groove portion 61 formed in the front-rear direction, and, for example, has the first groove portion 61 on each of both left and right sides. The front end of the first groove portion 61 extends toward both end portions of the windshield 43 in the left-right direction (the upper ends of the pair of front pillar portions 40), and communicates with a drain outlet 61a formed at both end portions of the front surface of the roof portion 42 in the left-right direction. The rear end of the first groove portion 61 extends toward both end portions of the rear glass 44 in the left-right direction (the upper ends of the pair of rear pillar portions 41), and communicates with a drain outlet 61b formed at both end portions of the rear surface of the roof portion 42 in the left-right direction. Thus, since drainage is performed toward the pair of front pillar portions 40 and the pair of rear pillar portions 41, it is possible to suppress drainage water from splashing on a driver who gets on and off from the side door 45, and since the drainage is performed while avoiding the central portions of the windshield 43 and the rear glass 44, it is possible to suppress deterioration of the driver's forward and rearward visibility.

An outer edge portion of the first groove portion 61 extending in the front-rear direction is formed so as to rise in a mountain shape, so that it is possible to prevent the water accumulated in the first groove portion 61 from overflowing to the outside in the left-right direction and to suppress drainage water from splashing on a driver who gets on and off from the side door 45. For example, the left edge portion of the first groove portion 61 on the left side rises in a mountain shape, and the right edge portion of the first groove portion 61 on the right side rises in a mountain shape.

The drainage groove 60 has a second groove portion 62 formed in the left-right direction, and, for example, has the second groove portion 62 on each of both front and rear sides of the roof portion 42. Both left and right end portions of the second groove portion 62 on the front side extends toward both end portions of the windshield 43 in the left-right direction (the upper ends of the pair of front pillar portions 40), and communicates with a drain outlet 61a formed at both end portions of the front surface of the roof portion 42 in the left-right direction. Both left and right end portions of the second groove portion 62 on the rear side extends toward both end portions of the rear glass 44 in the left-right direction (the upper ends of the pair of rear pillar portions 41), and communicates with a drain outlet 61b formed at both end portions of the rear surface of the roof portion 42 in the left-right direction.

The drainage groove 60 has a third groove portion 63 formed also around the skylight frame 53, the upper end of the skylight frame 53 is provided at a position higher than the bottom surface of the third groove portion 63, and the skylight 52 is supported by the skylight frame 53 at a position higher than the bottom surface of the third groove portion 63. The second groove portion 62 is formed on the front side of the skylight frame 53, and the third groove portion 63 communicates with the second groove portion 62. In the second groove portion 62, a skylight mounting portion 65 for attaching the skylight supporting portion 54 of the skylight 52 is formed at a position higher than the bottom surface of the second groove portion 62. The bottom surface of the third groove portion 63 around the skylight frame 53 is provided at a position higher than the bottom surface of the second groove portion 62, and water accumulated around the skylight frame 53 flows into the second groove portion 62.

An outer edge portion of the second groove portion 62 extending in the left-right direction is formed so as to rise in a mountain shape, and prevents water accumulated in the second groove portion 62 from overflowing to the outside in the front-rear direction. For example, the front edge portion of the second groove portion 62 on the front side rises in a mountain shape, and the rear edge portion of the second groove portion 62 on the rear side rises in a mountain shape.

In the roof portion 42, since the compartment of the air conditioning main body 48 of the air conditioning unit 47 is configured by the partition wall 42c erected on the lower side portion 42a, it is necessary to seal the compartment by sealing between the upper side portion 42b and the partition wall 42c. Here, the drainage groove 60 has a fourth groove portion 64 formed along the partition wall 42c of the compartment. Since the lower surface of the fourth groove portion 64 recessed in the upper surface of the upper side portion 42b is close to the partition wall 42c, the seal member between the upper side portion 42b and the partition wall 42c can be made relatively thin, and the internal sealing structure can be simplified and reduced in cost. The fourth groove portion 64 communicates with the first groove portion 61, the bottom surface of the fourth groove portion 64 is provided at a position higher than the bottom surface of the first groove portion 61, and water accumulated in the fourth groove portion 64 flows into the first groove portion 61.

As described above, according to the present embodiment, a tractor 1 includes a work vehicle including a cabin 12 having a driver's seat 30 includes: a skylight 52 disposed in a roof portion 42 of the cabin 12; and an air conditioning duct front portion 49b disposed in a front portion of the roof portion 42, wherein a skylight frame 53 opened to the skylight 52 includes a first frame portion 53a provided behind the duct front portion 49b, and a second frame portion 53b continuous from the first frame portion 53a in a region that at least partially overlaps the duct front portion 49b in a front-rear direction and in which the duct front portion 49b is not disposed in a plan view.

Accordingly, in the tractor 1, by providing the skylight frame 53 so as to avoid the duct front portion 49b for air-conditioning, an opening area of the skylight frame 53 can be maximally secured, and a daylight amount or a ventilation amount through the skylight 52 can be increased. Further, since a wide upward field of view can be secured through the skylight 52, maximum visibility can be secured, and usability can be improved. For example, when a front loader is attached to the front portion of the tractor 1, a bucket attached to the distal end portion of the arm can be checked through the skylight 52 in a state where an arm of the front loader is raised.

According to the present embodiment, the tractor 1 includes the skylight supporting portion 54 that supports the skylight 52 at a position overlapping the duct front portion 49b in a plan view.

Accordingly, in the tractor 1, by disposing the skylight supporting portion 54 such as a hinge at a position that is not visible to the driver, it is possible to reduce deterioration in visibility due to the skylight supporting portion 54 and improve usability. The skylight frame 53 is sealed by being closed from the upper side by the skylight 52. However, if a member for supporting the skylight 52 is provided inside the skylight frame 53 in a plan view, water may leak from a coupling portion between the member and the skylight 52. Even if a member for supporting the skylight 52 is provided outside the skylight frame 53 in a plan view, if the member is disposed across the outside and the inside of the skylight frame 53 in a plan view, there is a problem that sealing of the skylight frame 53 is impaired by the member. In contrast, by providing the skylight mounting portion 65, to which the skylight 52 is attached via the skylight supporting portion 54, on the outer side of the cabin 12, it is possible to suppress water leakage due to the arrangement of the skylight supporting portion 54 and the skylight mounting portion 65 without causing the above-described problem.

According to the present embodiment, the tractor 1 includes the drainage groove 60 (drainage portion) formed on the upper surface of the roof portion 42, and the skylight supporting portion 54 supports the skylight 52 at a position higher than the drainage groove 60.

Accordingly, in the tractor 1, the drainage performance of the skylight supporting portion 54 can be improved, and the occurrence of rust in the skylight supporting portion 54 can be suppressed.

According to the present embodiment, the tractor 1 includes the operation portion 52a for switching between the open state and the closed state of the skylight 52, and the roof portion 42 includes the reinforcing frame 55 that reinforces support of the skylight frame 53 on the side closer to the operation portion 52a than the skylight frame 53.

Accordingly, in the tractor 1, when a driver opens or closes the skylight 52 by vertically operating the operation portion 52a, a load is applied to the skylight frame 53 and the roof portion 42 in the vicinity of the operation portion 52a, but since the reinforcing frame 55 supports the skylight frame 53 on the side of the operation portion 52a, it is possible to suppress the load applied to the skylight frame 53 and the roof portion 42 when the skylight 52 is opened or closed. Since the skylight frame 53 is opened to the roof portion 42, vibration of the roof portion 42 in the vicinity of the skylight frame 53 can be suppressed by providing the reinforcing frame 55 in the vicinity of the skylight frame 53. Compared to a configuration in which a frame that reinforces the entire skylight frame 53 is provided, the configuration in which the reinforcing frame 55 is provided only on the operation portion 52a side can reinforce support of the skylight 52 and the skylight frame 53 while simplifying the configuration and reducing the cost.

According to the present embodiment, the reinforcing frame 55 is disposed across the left-right direction of the skylight frame 53.

Accordingly, in the tractor 1, a load applied to the skylight frame 53 and the roof portion 42 when the skylight 52 is opened or closed can be suppressed.

According to the present embodiment, the tractor 1 includes the shielding member 56 that shields the skylight 52, and the shielding member fixing portion 57 that fixes the shielding member 56 at a predetermined position with respect to the skylight 52.

Accordingly, in the tractor 1, a daylight amount through the skylight 52 can be limited by the shielding member 56.

According to the present embodiment, the shielding member 56 is configured to be displaced in the front-rear direction to change the shielded area of the skylight 52, and the shielding member fixing portion 57 fixes the shielding member 56 at any one of at least two or more fixing positions in the front-rear direction.

Accordingly, in the tractor 1, a shielded area can be changed according to situation, and comfort can be improved.

In the above embodiment, an example in which the work vehicle of the present invention is constituted by the tractor 1 has been described, but the present invention is not limited to this example, and the work vehicle of the present invention may be constituted by a work vehicle such as another agricultural work machine.

Note that the present invention can be properly modified without departing from the present invention's gist or concept that can be read from the claims and the entire specification, and a work vehicle including the above modification is also included in the technical concept of the present invention.

### Appendices of the Invention

Hereinafter, an outline of the invention extracted from the above-described embodiment will be described in supplementary notes. Note that the configurations and processing functions described in the following supplementary notes can be selected and arbitrarily combined.

### Appendix 1

A work vehicle including a cabin having a driver's seat, the work vehicle comprising: a skylight disposed in a roof portion of the cabin; and
an air conditioning duct front portion disposed in a front portion of the roof portion,
wherein a skylight frame opened to the skylight includes a first frame portion provided behind the duct front portion, and a second frame portion continuous from the first frame portion in a region that at least partially overlaps the duct front portion in a front-rear direction and in which the duct front portion is not disposed in plan view.

### Appendix 2

The work vehicle according to appendix 1, comprising: a skylight supporting portion that supports the skylight at a position overlapping the duct front portion in plan view.

### Appendix 3

The work vehicle according to appendix 2, comprising a drainage portion formed on an upper surface of the roof portion, wherein
the skylight supporting portion supports the skylight at a position higher than the drainage portion.

### Appendix 4

The work vehicle according to any one of appendices 1 to 3, comprising: an operation portion for switching between an open state and a closed state of the skylight, wherein
the roof portion includes a reinforcing member for reinforcing support of the skylight frame on a side closer to the operation portion than the skylight frame.

### Appendix 5

The work vehicle according to appendix 4, wherein the reinforcing member is disposed across a left-right direction of the skylight frame.

### Appendix 6

The work vehicle according to any one of appendices 1 to 5, comprising: a shielding member that shields the skylight; and
a shielding member fixing portion that fixes the shielding member at a predetermined position with respect to the skylight.

### Appendix 7

The work vehicle according to appendix 6, wherein the shielding member is displaced in a front-rear direction to change a shielded area of the skylight, and
the shielding member fixing portion fixes the shielding member at any one of at least two or more fixing positions in the front-rear direction.

### REFERENCE SIGNS LIST

1: Tractor (work vehicle)
2: Vehicle body
12: Cabin
13: Engine
14: Transmission device
30: Driver's seat
31: Steering wheel
40: Front pillar
41: Rear pillar
42: Roof portion
42a: Lower side portion
42b: Upper side portion
42c: Partition wall
43: Windshield
44: Rear glass
45: Side door
47: Air conditioning unit
48: Air conditioning main body
49: Air conditioning duct
49a: Duct side portion
49b: Duct front portion
50: Front discharge port
51: Side discharge port
52: Skylight
52a: Operation portion
53: Skylight frame
53a: First frame portion
53b: Second frame portion
54: Skylight supporting portion
55: Reinforcing frame (reinforcing member)
56: Shielding member
56a: Supported member
57: Shielding member fixing portion
57a: First fixing portion
57b: Second fixing portion
60: Drainage groove (drainage portion)
61: First groove portion
62: Second groove portion
63: Third groove portion
64: Fourth groove portion
65: Skylight mounting portion

## Claims

1. A work vehicle including a cabin having a driver's seat, the work vehicle comprising: a skylight disposed in a roof portion of the cabin; and
an air conditioning duct front portion disposed in a front portion of the roof portion,
wherein a skylight frame opened to the skylight includes a first frame portion provided behind the duct front portion, and a second frame portion continuous from the first frame portion in a region that at least partially overlaps the duct front portion in a front-rear direction and in which the duct front portion is not disposed in plan view.

2. The work vehicle according to claim 1, comprising: a skylight supporting portion that supports the skylight at a position overlapping the duct front portion in plan view.

3. The work vehicle according to claim 2, comprising a drainage portion formed on an upper surface of the roof portion, wherein
the skylight supporting portion supports the skylight at a position higher than the drainage portion.

4. The work vehicle according to claim 1, comprising: an operation portion for switching between an open state and a closed state of the skylight, wherein
the roof portion includes a reinforcing member for reinforcing support of the skylight frame on a side closer to the operation portion than the skylight frame.

5. The work vehicle according to claim 4, wherein the reinforcing member is disposed across a left-right direction.

6. The work vehicle according to claim 1, comprising: a shielding member that shields the skylight; and
a shielding member fixing portion that fixes the shielding member at a predetermined position with respect to the skylight.

7. The work vehicle according to claim 6, wherein the shielding member is displaced in a front-rear direction to change a shielded area of the skylight, and
the shielding member fixing portion fixes the shielding member at any one of at least two or more fixing positions in the front-rear direction.
